(19) Europäisches Patentamt

European Patent Office

Office européen des brevets

(11) **EP 1 099 352 B1**

(12) **FASCICULE DE BREVET EUROPEEN**

(45) Date de publication et mention
de la délivrance du brevet:
**02.04.2003 Bulletin 2003/14**

(21) Numéro de dépôt: **00922710.9**

(22) Date de dépôt: **21.04.2000**

(51) Int Cl.$^7$: **H04N 7/50**, G06T 9/00

(86) Numéro de dépôt international:
**PCT/FR00/01057**

(87) Numéro de publication internationale:
**WO 00/065843 (02.11.2000 Gazette 2000/44)**

(54) **PROCEDE ET DISPOSITIF DE QUANTIFICATION POUR COMPRESSION VIDEO**

QUANTISIERER FÜR VIDEOKOMPRESSION

QUANTIZING METHOD AND DEVICE FOR VIDEO COMPRESSION

(84) Etats contractants désignés:
**DE ES FR GB IT**

(30) Priorité: **26.04.1999 FR 9905337**

(43) Date de publication de la demande:
**16.05.2001 Bulletin 2001/20**

(73) Titulaire: **Thomson Licensing S.A.**
**92648 Boulogne Cedex (FR)**

(72) Inventeurs:
• **RUELLOU, Pierre**
  **F-92648 Boulogne cedex (FR)**
• **BORDES, Philippe**
  **F-92648 Boulogne Cedex (FR)**

(74) Mandataire: **Ruellan-Lemonnier, Brigitte**
**THOMSON multimedia,**
**46 quai A. Le Gallo**
**92648 Boulogne Cédex (FR)**

(56) Documents cités:
**EP-A- 0 541 302        EP-A- 0 618 733**
**WO-A-97/37322        WO-A-98/37701**
**GB-A- 2 306 846**

**Description**

L'invention concerne un procédé et un dispositif de quantification pour compression vidéo. Elle est plus particulièrement appliquée au codage vidéo selon la norme ISO/IEC MPEG2.

Les procédés de compression vidéo réalisent dans la chaîne de codage une opération de quantification. Cette quantification est en général appliquée sur des blocs de coefficients issus d'une transformée cosinus.

L'asservissement du pas de quantification au débit de sortie du codeur permet notamment d'effectuer une régulation de ce débit. La qualité d'image obtenue par un codeur à débit donné est en grande partie liée à cette politique de régulation. En effet il faut à la fois un pas de quantification suffisamment élevé pour ne pas dépasser le débit fixé et cependant suffisamment faible pour limiter les artefacts de codage du type effet de blocs. De plus des variations importantes de pas de quantification dans l'image provoquent des défauts de type "battement" et la régulation essaie donc de stabiliser au maximum le pas utilisé.

La régulation est basée sur un critère objectif qui est généralement le coût de codage du bloc quantifié. Si les coûts des blocs précédemment quantifiés s'écartent trop du coût moyen autorisé pour respecter le débit de consigne alors le pas de quantification va augmenter, dans le cas contraire il va diminuer. Ces variations ne tiennent pas compte du type de la zone que l'on est en train de coder et cela peut entraîner des défauts subjectifs. En effet, l'oeil est plus ou moins sensible aux défauts selon le contenu de la séquence codée. Dans une zone à fort mouvement les défauts seront moins visibles que dans une zone uniforme et fixe par exemple.

La demande de brevet internationale publiée sous le n° WO97/37322 décrit une méthode de codage exploitant une information de qualité subjective de l'image précédente pour la codage de l'image courante. Cette méthode ne permet cependant pas un codage en ligne de l'image courante.

L'invention a pour but de pallier les inconvénients précités.

Elle a pour objet un procédé de codage en ligne d'images vidéo avec quantification de données comprenant une étape de calcul d'un pas de quantification relatif à une image courante en fonction d'un débit souhaité et d'une information de qualité subjective, caractérisé en ce que l'image courante est traitée pour obtenir une image dégradée correspondante dont la comparaison à l'image courante permet de calculer l'information de qualité subjective et en ce que l'image courante est également retardée pendant ce traitement pour effectuer son codage en fonction de cette information de qualité subjective.

En particulier, l'information de qualité est du type JND (Just Noticeable Différence).

Une variante de l'invention consiste en ce que l'information est moyennée par blocs de pixels.

Une autre variante de l'invention consiste en ce que l'information relative à un bloc est filtrée dans une fenêtre autour de ce bloc.

Une autre variante de l'invention consiste en ce que l'information est pondérée par une information de qualité subjective moyennée sur l'image.

Une autre variante de l'invention consiste en ce que l'information de qualité subjective par pixel est fournie à partir d'un procédé d'évaluation subjective générant une image dégradée. L'image dégradée peut être la décodée locale issue d'un précédent codage de l'image de référence correspondante.

D'autres variantes de l'invention consistent en ce que la dégradation de l'image est obtenue en bruitant l'image de référence à l'aide d'un bruit gaussien ou bien en bruitant l'image de référence à l'aide d'opérations de transformée, quantification, transformée inverse et quantification inverse.

Une autre variante consiste en ce que le pas de quantification utilisé pour les opérations de quantification et de quantification inverse sont ceux utilisés lors du codage d'une image précédente.

Une autre variante consiste en ce que le pas de quantification utilisé pour les opérations de quantification et de quantification inverse sont ceux utilisés lors d'une préanalyse de l'image.

L'invention concerne également un dispositif pour la mise en oeuvre du procédé.

Les caractéristiques et avantages de la présente invention ressortiront mieux de la description suivante, donnée à titre d'exemple et en référence aux figures annexées où :

- la figure 1 représente un dispositif de quantification pour codeur MPEG,
- la figure 2 représente une variante du dispositif de quantification pour codeur MPEG.

L'idée de l'invention est de moduler le pas de quantification proposé par la régulation en fonction d'un critère de qualité subjective. Grâce à l'invention, pour un débit donné, la qualité globale de l'image est améliorée : en dégradant les zones où le spectateur est moins sensible à la qualité de l'image et en améliorant les zones où il est plus sensible à cette qualité, donc à débit constant et par le jeu des compensations, la qualité subjective de l'image est améliorée.

Le critère est fourni par un modèle psychovisuel. Par exemple, un tel modèle réalise une évaluation subjective d'une image, en général l'image décodée, par rapport à une image de référence, en général l'image source, et propose une localisation des zones les plus sensibles aux défauts.

Dans le cas d'un codage vidéo il faut fournir à ce modèle l'image source d'une part et d'autre part une image dégradée car on ne possède pas encore l'image décodée correspondante (codage a priori).

Cette image dégradée va être obtenue en appliquant à la source les opérations DCT, Quantification, Quantification inverse et DCT inverse, utilisées dans le codeur, de façon à avoir des défauts proches de ceux du codage vidéo. Le pas de quantification utilisé peut être le pas moyen utilisé lors du codage de l'image précédente ce qui permet de se rapprocher un peu plus de la réalité. Si une préanalyse INTRA est effectuée par le codeur, le pas utilisé peut alors être celui utilisé lors de cette préanalyse.

Cependant d'autres façons de générer l'image dégradée peuvent être envisagées, par exemple :

- en ajoutant un bruit gaussien à la source,
- en utilisant directement la décodée locale issue du premier codage, dans le cadre d'un codage 2 passes, la première passe permettant d'optimiser la seconde.

Une fois les 2 images disponibles, le modèle psychovisuel nous donne une information de type JND, selon l'acronyme de l'expression anglaise Just Noticeable Différence, reliant l'erreur par pixel à un défaut de perception subjectif. Cette information est par exemple une image dont les valeurs de luminance des pixels la constituant sont remplacées par des valeurs représentant le niveau de perception du défaut par l'oeil humain.

Cette information par pixel va dans un premier temps être ramenée à une information par macrobloc (en général une zone de 16*16 pixels) qui est l'unité de codage vidéo :

$$JND\_MB(k,l) = \frac{\sum_{i=0}^{M-1}\sum_{j=0}^{N-1} JND\_pixel(k*M+i, l*N+j)}{M*N}$$

Chaque macrobloc est constitué de N lignes et de M pixels par ligne. L'image étant découpée en macroblocs, les lettres k et l représentent respectivement le numéro de colonne et le numéro de ligne du macrobloc MB(k,l) dans l'image.

Cette information est ensuite filtrée dans une fenêtre de taille F, par exemple un macrobloc de part et d'autre du macrobloc traité, dans les 2 directions, de façon à éviter des variations trop nombreuses de pas de quantification d'un macrobloc à l'autre. En effet cela engendre un surcoût de codage non négligeable.

La valeur JND_MB est donc moyennée sur une fenêtre de F macroblocs de part et d'autre du macrobloc traité, par la formule suivante :

$$JND\_Fil(k,l) = \frac{\sum_{u=k-F}^{k+F}\sum_{v=l-F}^{l+F} JND\_MB(u,v)}{(2*F+1)^2}$$

Enfin ce critère local est comparé à la valeur moyenne de JND sur l'image, Mean_JND, de manière à prendre en compte la qualité globale de l'image dans la quantification :

$$Mean\_JND = \frac{\sum_{u=0}^{Sl-1}\sum_{v=0}^{MB-1} JND\_MB(u,v)}{Sl*MB}$$

MB est le nombre de macroblocs par tranche (appelée slice dans la norme MPEG),

SI est le nombre de tranches (slices) dans une image.

Le critère de pondération du pas de quantification est le suivant :

$$\Delta = JND\_Fil - Mean\_JND$$

Lorsque la sensibilité aux défauts est plus élevée localement qu'en moyenne dans l'image, c'est à dire lorsque $\Delta$ est positif, alors le pas de quantification est diminué, par exemple selon la relation :

$$Q\_MB = Q\_regulation - Min(0.3^*Q\_regulation, \Delta^2)$$

Q_MB est le pas de quantification alloué au macrobloc MB, c'est à dire après modification prenant en compte le critère de pondération.

Q_regulation est le pas de quantification qui a été calculé initialement par les circuits de régulation du codeur, c'est à dire le pas de quantification attribué au macrobloc avant modification.

On soustrait donc ici, au pas de quantification proposé, "l'écart de qualité" au carré, tant que cette valeur est inférieure à 0.3 fois le pas d'origine. Le fait de choisir la valeur minimum entre $\Delta^2$ et 0,3 x Q_régulation revient à s'autoriser une diminution maximum de 1/3 du pas d'origine.

Une variante de l'invention consiste à effectuer la comparaison, non pas en soustrayant la valeur moyenne de JND à la valeur filtrée mais en faisant le quotient de la valeur filtrée avec la valeur moyenne.

$$\alpha = \frac{JND\_Fil(k,l)}{Mean\_JND}$$

Si la valeur JND_Fil(k, l) du macrobloc k,l est proche de la valeur Mean_JND, il n'est pas nécessaire d'apporter une correction, les défauts n'étant ni plus ni moins visibles dans cette zone correspondant au macrobloc MB(k,l) qu'en moyenne dans l'image.

Si la valeur JND_Fil(k, l) est supérieure à la valeur Mean_JND, cela signifie que dans cette zone le spectateur sera plus sensible aux défauts et il est alors judicieux de diminuer le pas de quantification proposé par la régulation.

Si JND_Fil est inférieur à Mean_JND, le spectateur sera moins sensible aux défauts dans cette zone et par conséquent, une augmentation du pas de quantification est envisageable.

Avant d'appliquer le coefficient $\alpha$ ci-dessus il est préférable de le borner entre des valeurs BORNE_INF et BORNE_SUP de façon à éviter de trop fortes variations du pas de quantification. En effet des variations importantes peuvent provoquer une instabilité de l'algorithme de régulation.

Le pas de quantification proposé par la régulation est donc corrigé de la façon suivante :

$$Q\_MB = \frac{Q\_regulation}{MAX\left(BORNE\_INF, MIN\left(\alpha, BORNE\_SUP\right)\right)}$$

L'algorithme relatif à la première solution évite d'avoir de trop nombreux changement de pas de quantification. Subjectivement on constate que, dans les zones sensibles, le pas de quantification a bien diminué améliorant la définition.

Quant à l'algorithme de régulation, il est moins perturbé que celui correspondant à la variante proposée, favorisant une plus grande stabilité du rapport signal à bruit PSNR, acronyme de l'expression anglaise Peak Signal Noise Ratio.

D'une manière plus générale, ces algorithmes permettent de faire varier localement le pas de quantification en se basant sur des critères de qualité subjective. Ils sont utilisables dans n'importe quel codeur vidéo et compatibles avec les algorithmes de contrôle de débit existants. Ainsi le coût de codage de l'image est réparti selon un critère subjectif permettant d'allouer plus de bits aux zones les plus sensibles aux défauts du point de vue du spectateur.

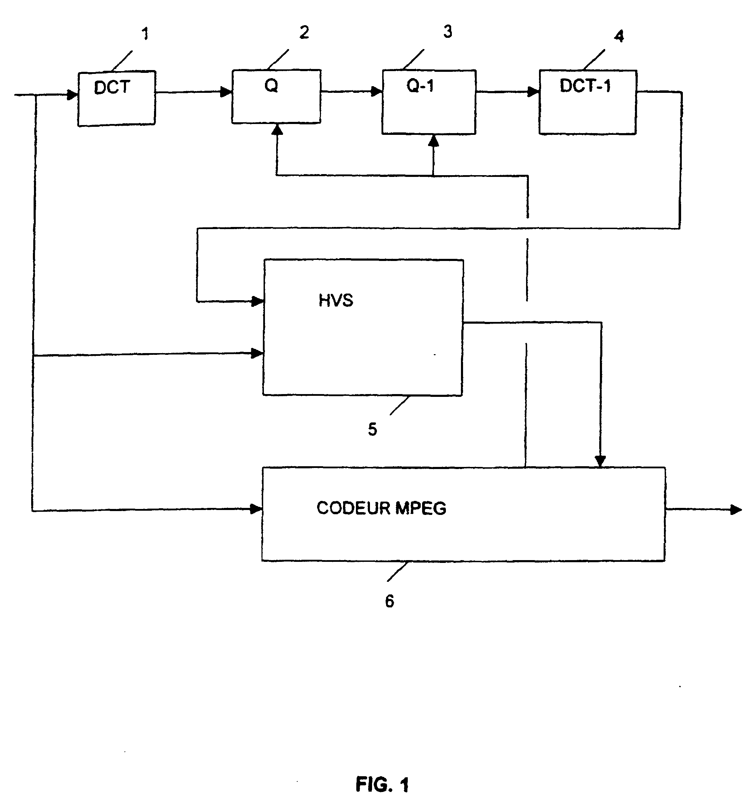

La figure 1 représente un dispositif mettant en oeuvre le procédé précédemment décrit, dans le cas où l'image dégradée serait obtenue en appliquant à la source, les opérations DCT, Quantification, Quantification inverse et DCT inverse.

L'image source alimente successivement un codeur à transformée cosinus discrète 1, un quantificateur 2, un quantificateur inverse 3 et un codeur à transformée cosinus discrète inverse 4. L'image ainsi obtenue appelée image dégradée est ensuite appliquée à un circuit de traitement HVS 5 qui reçoit, sur une deuxième entrée, l'image source. L'image source est également transmise à un codeur de type MPEG 6. Ce codeur MPEG reçoit, sur une deuxième entrée, les informations provenant du circuit de traitement HVS 5. Le quantificateur 2 et le quantificateur inverse 3 reçoivent également des informations du codeur MPEG 6. La sortie du codeur MPEG fournit les données comprimées de codage de l'image source.

Les informations reçues par le codeur DCT sont des informations de blocs d'image source, l'image étant initialement décomposée en blocs d'images à l'aide de circuits non représentés sur la figure. Les blocs d'image subissent un codage de type DCT par l'intermédiaire du circuit 1. Les coefficients correspondant aux blocs de données ainsi transformés sont ensuite quantifiés par l'intermédiaire du circuit de quantification 2 puis déquantifiés par l'intermédiaire d'un circuit de déquantification 3. Le pas de quantification utilisé est par exemple le pas de quantification calculé par le codeur MPEG 6 pour le codage du bloc correspondant de l'image précédente. Le bloc de coefficients déquantifiés est enfin transmis à un circuit de décodage inverse DCT-1 réalisant la transformée inverse du circuit 1. Les blocs obtenus correspondent à l'image dégradée et sont transmis au circuit de traitement HVS 5.

Ce circuit 5 reçoit les blocs de l'image source et ceux de l'image dégradée. Une fois reçus les blocs de l'image complète, il met en oeuvre un algorithme de calcul pour fournir une information de type JND, c'est à dire une information relative, pour chacun des blocs et donc pour la zone correspondante, à la sensibilité du spectateur aux défauts de l'image, dans la zone correspondant au bloc considéré.

Cet algorithme est par exemple basé sur des fonctions de masquages (filtres) modélisant le comportement du système visuel humain. Chaque fonction indique si la différence entre les 2 images d'entrée est perceptible ou non, vis à vis du comportement qu'elle modélise (masquage dû au contraste, à la luminance élevée ou pas, à la texture, au mouvement, etc.). La combinaison de ces fonctions permet d'obtenir une image dont l'intensité de chaque pixel est proportionnelle à la visibilité de l'erreur dans l'image considérée.

Cette information est transmise, pour chaque bloc d'image, au codeur MPEG 6 qui après avoir calculé le pas de quantification d'un bloc selon les algorithmes classiques de régulation, modifie cette valeur calculée en fonction de cette information de type JND. C'est cette valeur modifiée qui est utilisée par le codeur pour réaliser la quantification des coefficients du bloc. Le codeur fournit en sa sortie, des données numériques comprimées correspondant au codage MPEG.

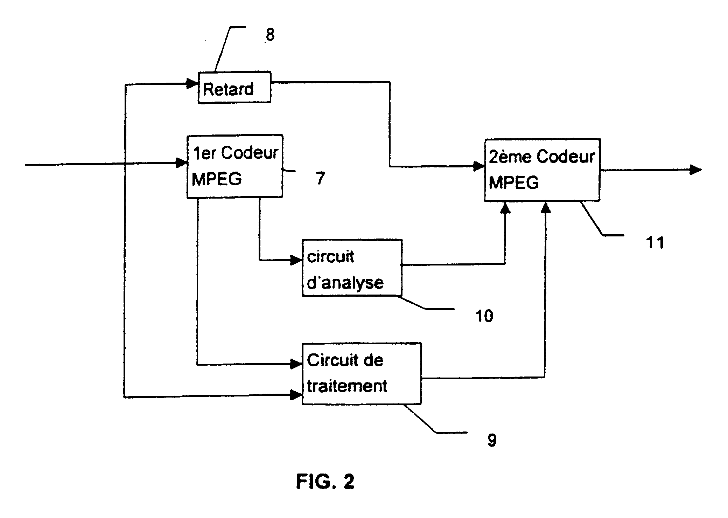

Une variante de l'invention est représentée en figure 2.

L'image source est transmise en parallèle sur l'entrée d'un premier codeur MPEG 7, d'un circuit à retard 8 et d'un circuit de traitement 9. Le premier codeur MPEG transmet, sur une première sortie, une image décodée locale vers une deuxième entrée du circuit de traitement 9 et, sur une deuxième sortie, des données relatives à la compression effectuée vers un circuit d'analyse 10. La sortie de ce circuit 10 est reliée à une première entrée d'un deuxième codeur MPEG 11. La sortie du circuit à retard 8 est reliée à une deuxième entrée du deuxième codeur 11. La sortie du circuit de traitement est reliée à une troisième entrée du deuxième codeur 11. La sortie de ce deuxième codeur est la sortie des données comprimées.

L'image source est donc transmise à un premier codeur 7 de type MPEG. La première sortie de ce codeur fournit la décodée locale, c'est à dire l'image reconstruite qui permet, dans le codeur, d'effectuer un codage différentiel de l'image courante par rapport à cette image précédente reconstruite appelée décodée locale. Cette image est reconstruite car il s'agit de l'image codée par transformation cosinus et quantification, selon la norme MPEG, puis décodée par les opérations inverses. Le circuit de traitement 9 compare l'image source à la décodée locale qui est l'image dégradée. Ce circuit de traitement fournit au deuxième codeur une image de gris dont l'intensité de chaque pixel est proportionnelle à la visibilité de l'erreur dans l'image considérée, comme indiqué plus haut.

Le deuxième codeur MPEG 11 reçoit également les informations issues du circuit d'analyse de la première passe. Ce circuit d'analyse traite par exemple des informations relatives au coût de codage des images lors de la première passe, aux vecteurs de mouvement pour réaliser des histogrammes de champs de vecteurs de mouvement, calculer la répartition des débits sur une image ou un groupe d'images etc. Ces données sont transmises au deuxième codeur qui les exploite pour décider du type de codage des images, pour le calcul du pas de quantification...

Le circuit à retard 8 permet de retarder la transmission des images en fonction du temps d'analyse des images. Ce temps est lié au nombre d'images analysées à chaque fois. par exemple un groupe d'images (GOP). Le deuxième codeur 11 effectue donc le codage de ces images retardées en fonction des informations provenant du circuit d'analyse 10 et du circuit de traitement 9, le pas de quantification étant modifié en fonction de ces données.

Il s'agit là d'exemples de réalisation et bien sûr tout type de circuit permettant d'obtenir des images dégradées peut être utilisé sans que l'on sorte du domaine de l'invention.

## Revendications

**1.** Procédé de codage en ligne d'images vidéo avec quantification de données comprenant une étape de calcul d'un pas de quantification (6, 11) relatif à une image courante en fonction d'un débit souhaité et d'une information de qualité subjective (5, 9), **caractérisé en ce que** l'image courante est traitée pour obtenir une image dégradée correspondante dont la comparaison à l'image courante permet de calculer l'information de qualité subjective et **en ce que** l'image courante est également retardée (8) pendant ce traitement pour effectuer son codage en fonction de cette information de qualité subjective.

2. Procédé selon la revendication 1, **caractérisé en ce que** l'information de qualité subjective est du type JND (Just Noticeable Différence).

3. Procédé selon la revendication 1, **caractérisé en ce que** l'information de qualité subjective est moyennée par blocs de pixels.

4. Procédé selon la revendication 3, **caractérisé en ce que** l'information de qualité subjective relative à un bloc est filtrée dans une fenêtre autour de ce bloc.

5. Procédé selon la revendication 3 ou 4, **caractérisé en ce que** l'information de qualité subjective est pondérée par une information de qualité subjective moyennée sur l'image.

6. Procédé selon la revendication 1, **caractérisé en ce que** la dégradation est obtenue en bruitant l'image de référence à l'aide d'un bruit gaussien.

7. Procédé selon la revendication 1, **caractérisé en ce que** la dégradation est obtenue en bruitant l'image de référence à l'aide d'opérations de transformée, quantification, transformée inverse et quantification inverse.

8. Procédé selon la revendication 7, **caractérisé en ce que** le pas de quantification utilisé pour les opérations de quantification et de quantification inverse sont ceux utilisés lors du codage d'une image précédente.

9. Procédé selon la revendication 7, **caractérisé en ce que** le pas de quantification utilisé pour les opérations de quantification et de quantification inverse sont ceux utilisés lors d'une préanalyse de l'image.

10. Procédé selon la revendication 1, **caractérisé en ce que** l'image dégradée est la décodée locale issue d'un précédent codage de l'image de référence correspondante.

11. Dispositif de codage en ligne d'images vidéo comportant un codeur de type MPEG (6) pour le codage d'une image source, **caractérisé en ce qu'**il comporte également un circuit de codage et de décodage recevant l'image source pour obtenir une image dégradée, un circuit de traitement (5) recevant l'image source et l'image dégradée pour fournir au codeur (6), par comparaison des images, une information relative à la sensibilité de zones de l'image source aux défauts de codage, un circuit de mémorisation d'au moins une image recevant l'image source pour la transmettre au codeur de type MPEG (6), le codage d'un bloc d'image source se faisant à partir d'un pas de quantification calculé en fonction de la zone sensible de l'image source à laquelle il appartient.

12. Dispositif selon la revendication 11, **caractérisé en ce que** le circuit de codage et de décodage comprend un circuit de codage DCT (1), un circuit de quantification (2), un circuit de quantification inverse (3), un circuit de codage DCT inverse (4) pour fournir l'image dégradée.

## Claims

1. Process for the on-line coding of video images together with data quantization comprising a step of calculating a quantization interval (6, 11) relating to a current image as a function of a desired bit rate and of a subjective quality cue (5, 9), **characterized in that** the current image is processed so as to obtain a corresponding degraded image, comparison of which with the current image makes it possible to calculate the subjective quality cue and **in that** the current image is also delayed (8) during this processing so as to perform coding thereof as a function of this subjective quality cue.

2. Process according to Claim 1, **characterized in that** the subjective quality cue is of the JND type (Just Noticeable Difference).

3. Process according to Claim 1, **characterized in that** the subjective quality cue is averaged in blocks of pixels.

4. Process according to Claim 3, **characterized in that** the subjective quality cue relating to a block is filtered in a window around this block.

5. Process according to Claim 3 or 4,
**characterized in that** the subjective quality cue is weighted by a subjective quality cue averaged over the image.

6. Process according to Claim 1, **characterized in that** the degradation is obtained by making the reference image noisy with the aid of Gaussian noise.

7. Process according to Claim 1, **characterized in that** the degradation is obtained by making the reference image noisy with the aid of transform, quantization, inverse transform and inverse quantization operations.

8. Process according to Claim 7, **characterized in that** the quantization interval used for the quantization and inverse quantization operations is that used during the coding of a previous image.

9. Process according to Claim 7, **characterized in that** the quantization interval used for the quantization and inverse quantization operations is that used during a preanalysis of the image.

10. Process according to Claim 1, **characterized in that** the degraded image is the local decoded arising from a previous coding of the corresponding reference image.

11. Device for the on-line coding of video images comprising an MPEG type coder (6) for the coding of a source image, **characterized in that** it also includes a coding and decoding circuit receiving the source image so as to obtain a degraded image, a processing circuit (5) receiving the source image and the degraded image so as to provide the coder (6), by comparing the images, with a cue relating to the sensitivity of areas of the source image to coding defects, a circuit for storing at least one image receiving the source image so as to transmit it to the MPEG type coder (6), the coding of a source image block being performed on the basis of a quantization interval calculated as a function of the sensitive area of the source image to which it belongs.

12. Device according to Claim 11, **characterized in that** the coding and decoding circuit comprises a DCT coding circuit (1), a quantization circuit (2), an inverse quantization circuit (3), an inverse DCT coding circuit (4) for providing the degraded image.

**Patentansprüche**

1. Verfahren zur Online-Codierung von Videobildern mit einer Quantisierung von Daten mit einem Schritt zur Berechnung eines Quantisierschritts (6, 11) für ein laufendes Bild in Abhängigkeit von einer gewünschten Bitrate und von Informationen über die subjektive Qualität (5, 9),
**dadurch gekennzeichnet, dass**
das laufende Bild verarbeitet wird, um ein entsprechendes verschlechtertes Bild zu erhalten, dessen Vergleich mit einem laufenden Bild es ermöglicht, die Informationen über die subjektive Qualität zu berechnen, und dass das laufende Bild außerdem während der Verarbeitung verzögert wird (8), um seine Codierung in Abhängigkeit von diesen Informationen über die subjektive Qualität durchzuführen.

2. Verfahren nach Anspruch 1, **dadurch gekennzeichnet, dass** die Informationen für die subjektive Qualität vom Typ JND (Just Noticeable Difference) sind.

3. Verfahren nach Anspruch 1, **dadurch gekennzeichnet, dass** die Informationen für die subjektive Qualität über Pixelblöcke gemittelt werden.

4. Verfahren nach Anspruch 3, **dadurch gekennzeichnet, dass** die Informationen für die subjektive Qualität in einem Fenster um diesen Block herum gefiltert werden.

5. Verfahren nach Anspruch 3 oder 4, **dadurch gekennzeichnet, dass** die Informationen für die subjektive Qualität durch über das Bild gemittelte Informationen für die subjektive Qualität gewichtet werden.

6. Verfahren nach Anspruch 1, **dadurch gekennzeichnet, dass** die Verschlechterung dadurch erreicht wird, dass das Referenzbild mit Hilfe eines Gaußschen Rauschens verrauscht wird.

7.  Verfahren nach Anspruch 1, **dadurch gekennzeichnet, dass** die Verschlechterung dadurch erreicht wird, dass das Referenzbild mit Hilfe von Vorgängen einer Transformation, einer Quantisierung, einer inversen Transformation und einer inversen Quantisierung verrauscht wird.

8.  Verfahren nach Anspruch 7, **dadurch gekennzeichnet, dass** der für die Vorgänge der Quantisierung und der inversen Quatisierung benutzte Quantisierschritt derjenige ist, der während der Codierung eines vorangehenden Bildes benutz wird.

9.  Verfahren nach Anspruch 7, **dadurch gekennzeichnet, dass** die Quantisierschritte, die für die Vorgänge der Quantisierung und der inversen Quantisierung benutzt werden, diejenigen sind, die bei einer Voranalyse des Bildes benutzt werden.

10. Verfahren nach Anspruch 1, **dadurch gekennzeichnet, dass** das verschlechterte Bild das örtlich codierte Bild ist, das aus einer vorangehenden Codierung des entsprechenden Referenzbildes hervorgeht.

11. Vorrichtung zur Online-Codierung von Videobildern mit einem Coder vom Typ MPEG (6) für die Codierung eines Quellenbildes, **dadurch gekennzeichnet, dass** sie außerdem eine das Quellenbild empfangende Codier- und Decodierschaltung enthält, um ein verschlechtertes Bild zu gewinnen, eine das Quellenbild und das verschlechterte Bild empfangene HVS-Verarbeitungsschaltung enthält, um zu dem Coder (6) durch Vergleich der Bilder Informationen für die Empfindlichkeit der Bereiche des Quellenbildes gegenüber Codierfehlern zu gewinnen, eine Schaltung zur Speicherung wenigstens eines das Quellenbild empfangenen Bildes enthält, um dieses zu dem Coder vom Typ MPEG (6) zu übertragen, wobei die Codierung eines Quellenbildblocks aus einem Quantisierschritt erfolgt, der in Abhängigkeit von dem empfindlichen Bereich des Quellenbildes berechnet wird, zu dem es gehört.

12. Vorrichtung nach Anspruch 11, **dadurch gekennzeichnet, dass** die Codierund die Decodierschaltung eine DCT-Codierschaltung (1), eine Quantisierschaltung (2), eine inverse Quantisierschaltung (3), eine inverse DCT-Codierschaltung (4) zur Lieferung des verschlechterten Bildes enthält.

**FIG. 1**

8

Retard

1er Codeur
MPEG

7

2ème Codeur
MPEG

11

circuit
d'analyse

10

Circuit de
traitement

9

**FIG. 2**